# EUROPEAN PATENT SPECIFICATION

(11) **EP 2 032 007 B1**
(45) Date of publication and mention of the grant of the patent: **08.10.2014**
(21) Application number: 06766329.4
(22) Date of filing: 13.06.2006
(51) Int. Cl.: A47J 43/25

(54) **REINFORCED VESSEL/GRATER FOR FRIABLE FOOD PRODUCTS**
VERSTÄRKTES GEFÄSS/VERSTÄRKTE REIBE FÜR BRATBARE NAHRUNGSMITTELPRODUKTE
ENSEMBLE RÂPE/RÉCIPIENT À RENFORT POUR PRODUITS ALIMENTAIRES FRIABLES

(43) Date of publication of application: 11.03.2009
(73) Proprietor: Bisio Progetti S.p.A, 15100 Alessandria (IT)
(72) Inventor: BISIO Stephano, I-15100 Alessandria (IT)
(74) Representative: Garavelli, Paolo
(86) International application number: PCT/IT2006/000446
(87) International publication number: WO 2007/144908

(56) References cited:
- WO-A-2006/051564
- BE-A6- 1 014 764
- FR-A2- 2 510 381

## Description

The present invention refers to a reinforced vessel/grater for friable food products, such as for example hard cheese to be grated.

An item of this type performs both the function of a housing for the food product, insulating it from the external environment during its transport and storage in the sales point and by the customer, and the function of a grater upon its consumption, as described, for example, in documents WO 2006/051564 GB-A-1282940, WO-A-99/017649, GB-A-2396320 and EP-A-1554962, this latter one of the same Applicant of the present Application.

The above known models of this type of vessel/grater comprise:
- a base on which a member shaped as an inverted cup is rotatingly assembled in order to define a chamber for containing the food product, the base comprising a grating plate which composed the chamber bottom and a plurality of through holes, with whose edges respective tooth projecting in the chamber are associated,
- a threaded rod which extends upwards from the grating plate in the chamber, and
- a pressing plate having a central threaded hole which is engaged by the threaded rod and having an external perimeter adapted to engage the internal wall of the inverted cup-shaped member so that the rotation of the inverted cup-shaped member with respect to the base implies the translation of the pressing plate along the rod and the compression of the food product against the plate, so that the food product is crushed and dispensed from the containing chamber.

A common problem to all these vessels is that, in case of fall or violent impact, the threaded rod and the base are subjected to a related force from the internal food product, which, being hard, distorts them and often breaks them, and also breaks the external transparent vessel, making *de facto* the vessel unusable as a whole.

Object of the present invention is solving the above prior art problems, by providing a reinforced vessel/grater, which is not subjected to internal or external distortions or breakages in case of collisions, falls or other impact events.

Another object of the present invention is providing a vessel as mentioned above which is easy and economic to realise, obtaining the reinforcement functionality without using additional parts.

The above and other objects of the invention, as will result from the following description, are obtained with a vessel/grater as claimed in claim 1. Preferred embodiments and non trivial variations of the present invention are the subject matter of the dependent claims.

The present invention will be better described by some preferred embodiments thereof, provided as a non-limiting example, with reference to the enclosed drawings, in which:
- Figure 1 is a bottom perspective view of an embodiment of the reinforced base of the vessel/grater according to the present invention;

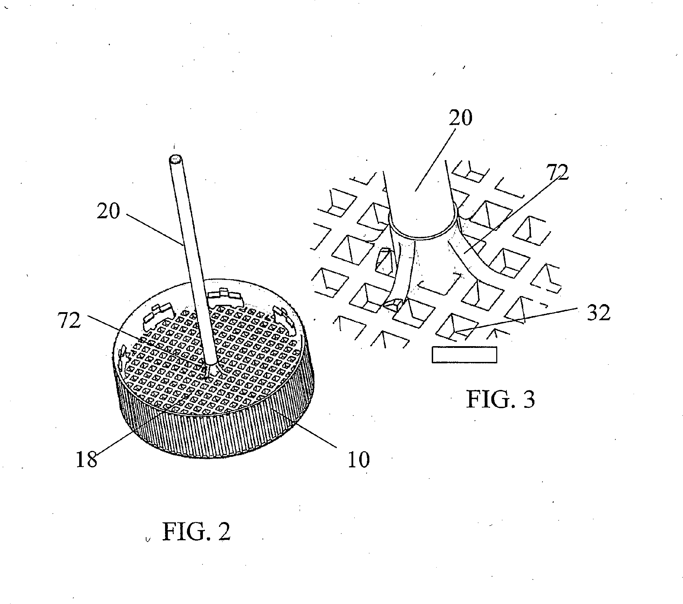

- Figure 2 is a top perspective view of another embodiment of the vessel/grater base;
- Figure 3 is a detailed view of Figure 2;
- Figure 4 is a bottom view of the base of Figure 1;
- Figure 5 is a sectional view obtained along line A-A in Figure 4;
- Figure 6 is a sectional view obtained along line B-B in Figure 4;

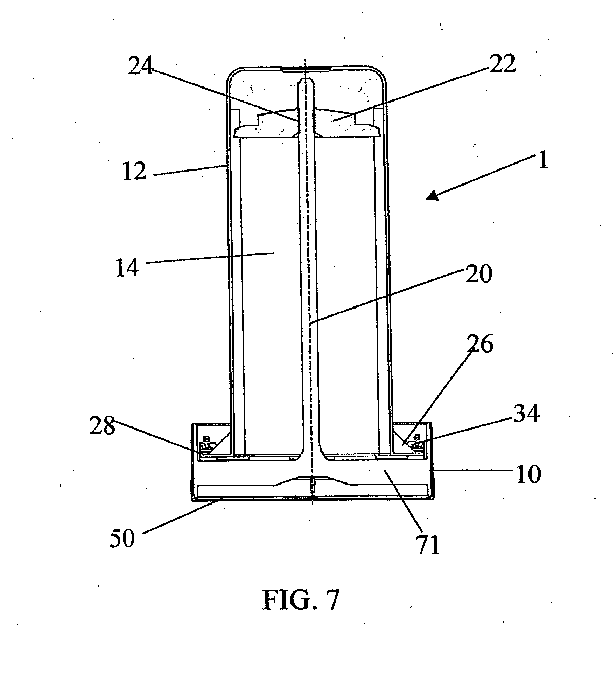

- Figure 7 is a side view of an embodiment of the vessel/grater of the present invention;
- Figure 8 is a top view of another embodiment of the vessel/grated of the invention; and
- Figure 9 is a side view of the vessel of Fig. 8.

With reference to the Figures, a preferred embodiment of the vessel/grater of the present invention will be described. It will be imediately obvious to an average skilled person in the art that the invention can be applied to other types of vessel/grater, both currently manufactured, and which can be produced in the future.

The vessel/grater 1 of the invention can be used for a friable food product, in particular a piece of hard cheese, and comprises a base 10 on which an inverted cup-shaped member 12, having a circular or polygonal, in particular square, cross section, is rotatingly assembled in order to define a chamber 14 for containing cheese.

The base 10 is composed of a circular sleeve inside which a circular grating plate 18 is transversally secured and composes the bottom of the containing chamber 14.

A threaded rod 20 having an axis parallel to the sleeve 10 axis extends upwards from the center of the grating plate 18 in the chamber 14. A pressing plate 22 having an external perimeter, in this case with a square shape, which reproduces the shape of the internal wall of the inverted cup-shaped member 12, is engaged by the threaded rod 20 through a central threaded hole 24.

The inverted cup-shaped member 12 has, in the area of its mouth, a flange 26 having an external perimeter which reproduces the outline of the internal cross section of the sleeve 10. The flange 26 is kept associated with the faced surface of the plate 18 through projections 28 which radially project from the internal wall of the sleeve 10 and are adapted to engage corresponding hooks 34 arranged on the base 10. The lower edge of the sleeve 10 can be closed by a removable cover 50.

The grating plate 18 has a plurality of through holes 32 which are arranged in a plurality of parallel rows. A respective tooth (not shown) associated with the edge of every hole 32 projects from the plate 18 side which is oriented towards the containing chamber 14.

When grating, the rotation of the inverted cup-shaped member 12 (to which the piece of cheese is secured), with respect to the base 10, implies a downwards translation of the pressing plate 22 along the rod 20 and the compression of the piece of cheese against the plate 18. The cheese is thereby crushed by the teeth in fragments which pass through the holes 32 and fall downwards.

In order to solve the problem of an accidental breakage of base 10 and rod 20 in case of falls, collisions or other violent impact events, the base 10 is equipped with a plurality of reinforcing ribs 70, 71, preferiably placed in the base 10 externally to the vessel/grater 1, namely on the side of the base 10 not in contact with the food product to be granted.

The reinforcing ribs 70, 71 are composed of first reinforcing ribs 70, equipped with a progressivley increasing cross section from the end to the center of the base 10, and of second reinforcing ribs 71, equipped with a uniform cross section towards the ends and a reduced cross section towards the center of the base 10.

Once having established this types of first and second ribs 70 and 71, which on one hand provide a strenghtening of the base 10 which is more than enough to support sudden and strong impacts of various types, and on the other hand allow an integral embodiment with the base 10 itself, for example through injection molding in the lowered area of the second ribs 71, it is obviously possible to combine ribs 70 and 71 in any combination which allows reaching the most satisfactory results.

In particular, a configuration could be provided with only two second reinforcing ribs 71 placed in order to form a cross having its center in the contact point between base 10 and threaded rod 20.

Or, a configuration could be provided with only four first reinforcing ribs 70 placed in order to form a cross having its center in the contact point between base 10 and threaded rod 20.

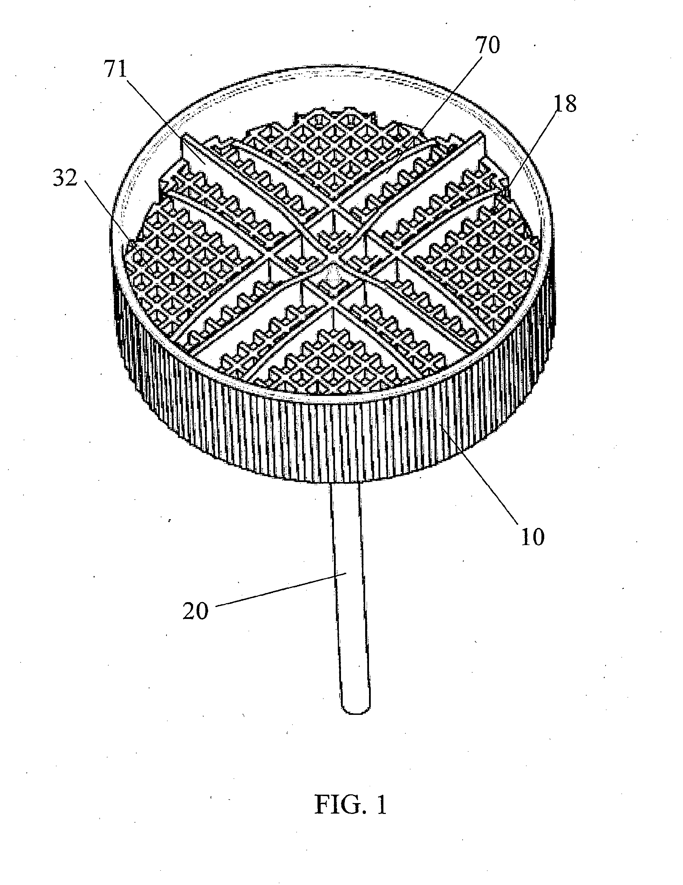

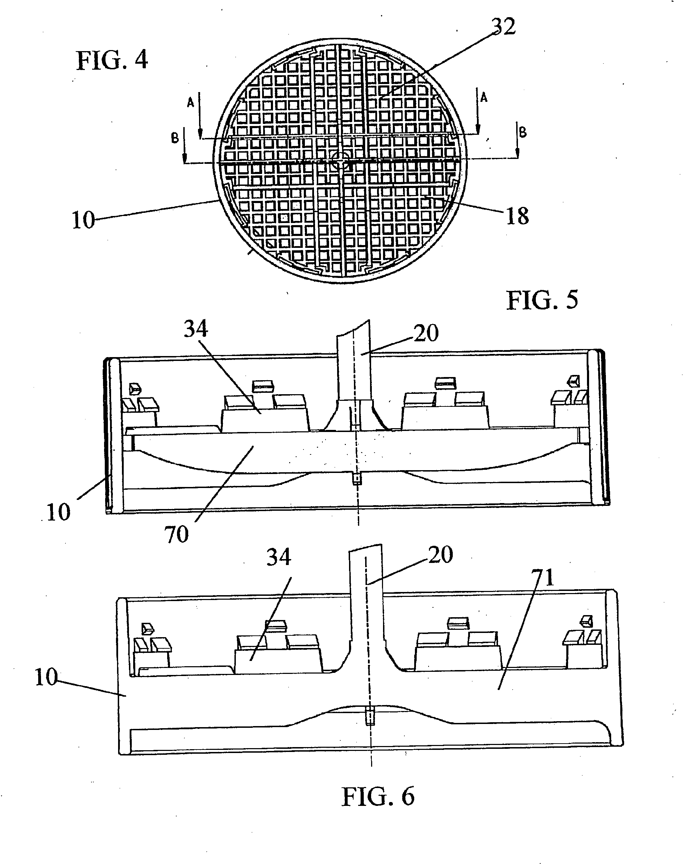

Still more, as shown in particular in Figures 1 and 4 to 6, a configuration could be provided in which the reinforcing ribs 70, 71 are composed of four first reinforcing ribs 70 and two second reinforcing ribs 71, all placed in order to form a cross having its center in the contact point between base 10 and threaded rod 20, in which the two second reinforcing ribs 71 are placed at the same distance in the space formed by the two pair of first reinforcing ribs 70 and parallel thereto.

As can be seen, many other possible arrangements of such ribs 70, 71 could be imagined.

The cross arrangement shown allows distributing the impact loads uniformly on the ribs 70 and 71, whose arrangement also facilitates the rotation of base 10 in the operating step when cheese is grated.

Anyway, other configurations are possible, such as, for example, one with two or three rib arms only, or one with five or more rib arms, till a sort of radiant crown is obtained, similar to bicycle wheels, or with arms not passing by the center and not mutually crossing, with variable slants at will.

In order to provide a further reinforcing characteristic, the vessel/grater 1 of the present invention can be equipped with a plurality of shoulders 72 provided in the connection point between base 10 and threaded rod 20 inside the vessel/grater 1. Also in this case, in the preferred arrangement, the shoulders 72 are four, rest on the base 10 and are symmetrically placed around the threaded rod 20.

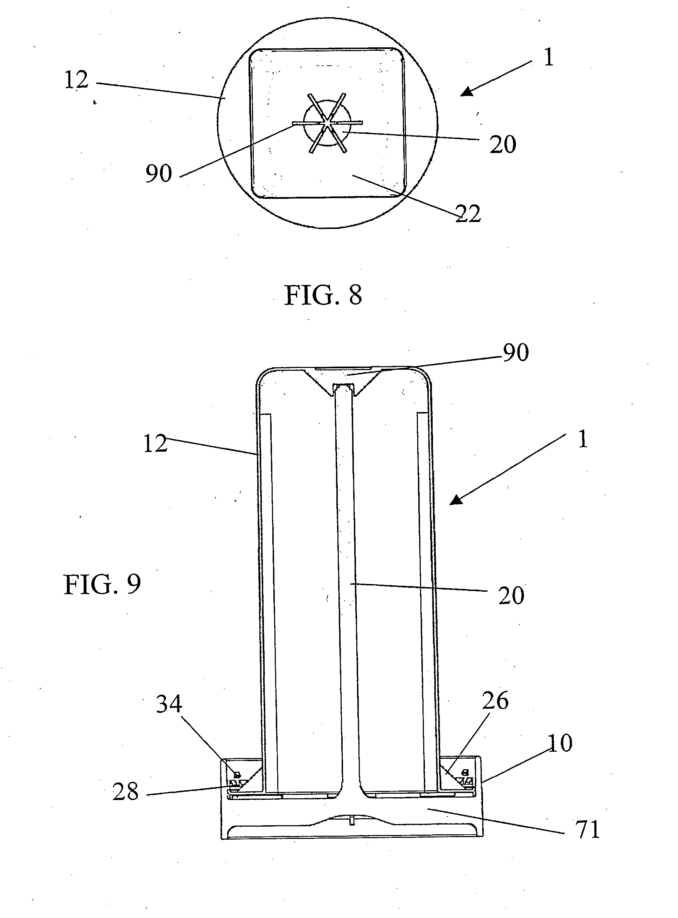

Figures 8 and 9 show another variation of the vessel/grater 1 of the present invention. In such variation, a plurality of supporting means 90 have been added, which reinforce the rod 20 at its opposite end to the one where the ribs 70, 71 are placed. Such supporting means 90 prevent rod 20 and member 12 from breaking after an impact. In the embodiment shown, the supporting means 90 are six and externally depart as a star from the rod 20: obviously, it is possible to realise any other shape, arrangement and number of supporting means 90. For example, the supporting means 90 can be composed of an additional piece to be interposed between vessel 1 and rod 20, or can be directly obtained in a single piece with the vessel 1.

In addition to prevent the rod 20 from breaking, the inventive arrangement avoids distorting the plane 18 and at the same time avoids the elongation of the rod 20 as a whole, thereby preventing it from colliding with and breaking the external transparent vessel in case of impact. In this way, due to the fact that a stiffened configuration is provided, it is possible to use soft and rubbery materials, always guaranteeing the lack of vessel breakage.

## Claims

1. Reinforced vessel/grater (1) for friable food products, in particular hard cheese, comprising:
- a base (10) on which an inverted cup-shaped member (12) is rotatingly assembled in order to define a chamber (14) for containing the food product, the base (10) comprising a grating plate (18) which composes a bottom of the chamber (14) and has a plurality of through holes (32) with whose edges respective teeth projecting in the chamber (14) are associated, said base (10) being equipped with a plurality of reinforcing ribs (70, 71),
- a threaded rod (20) which extends upwards from the grating plate (18) in the chamber (14), and
- a pressing plate (22) having a central threaded hole (24) which is engaged by the threaded rod (20) and having an external perimeter adapted to engage an internal wall of the inverted cup-shaped member (12) in such a way that a rotation of the inverted cup-shaped member (12) with respect to the base (10) implies a translation of the pressing plate (22) along the rod (20) and a compression of the food product against the plate (18) so that the food product is crushed and dispensed by the containing chamber (14),
**characterised in that** said reinforcing ribs (70, 71) are composed of first reinforcing ribs (70), equipped with a progressively increasing cross section from end to center of said base (10), and of second reinforcing ribs (71), equipped with a uniform cross section at the ends and a reduced cross section at the center of said base (10).

2. Vessel/grater (1) according to claim 1, **characterised in that** said reinforcing ribs (70, 71) are placed in said base (10) externally to said vessel/grater (1), namely on a side of the base (10) not in contact with the food product to be grated.

3. Vessel/grater (1) according to claim 1, **characterised in that** said reinforcing ribs (70, 71) are composed of two second reinforcing ribs (71) placed in order to form a cross having its center in the contact point between said base (10) and said threaded rod (20).

4. Vessel/grater (1) according to claim 1, **characterised in that** said reinforcing ribs (70, 71) are composed of four first reinforcing ribs (70) placed in order to form a cross having its center in the contact point between said base (10) and said threaded rod (20).

5. Vessel/grater (1) according to claim 1, **characterised in that** said reinforcing ribs (70, 71) are composed of four first reinforcing ribs (70) and two second reinforcing ribs (71), all placed in order to form a cross having its center in the contact point between said base (10) and said threaded rod (20), said two second reinforcing ribs (71) being placed at a same distance in a space formed of the two pairs of said first reinforcing ribs (70) and in parallel with said first reinforcing ribs (70).

6. Vessel/grater (1) according to claim 1, **characterised in that** it is further equipped with a plurality of shoulders (72) provided in a connection point between said base (10) and said threaded rod (20) inside said vessel/grater (1).

7. Vessel/grater (1) according to claim 6 **characterised in that** said shoulders (72) are four, rest on said base (10) and are symmetrically placed around said threaded rod (20).

8. Vessel/grater (1) according to claim 1, **characterised in that** it is further equipped with a plurality of supporting means (90) adapted to reinforce the rod (20) at its opposite end to the one where said ribs (70, 71) are placed.

9. Vessel/grater (1) according to claim 8, **characterised in** said supporting means (90) are six and externally depart as a star from said rod (20).

10. Vessel/grater (1) according to claim 8 or 9, **characterised in** said supporting means (90) are composed of an additional piece adapted to be interposed between vessel (1) and rod (20).

11. Vessel/grater (1) according to claim 8 or 9, **characterised in** said supporting means (90) are directly obtained in a single piece with the vessel (1).

## Patentansprüche

1. Behälter/Reibe (1), verstärkt, für körnige Lebensmittel, insbesondere Hartkäse, bestehend aus:
- einer Basis (10), auf die ein Element (12) in Form einer gekippten Tasse rotierend montiert ist, wodurch ein Raum (14) für die Aufnahme eines Lebensmittelproduktes gebildet wird. Die Basis (10) enthält eine Reibeplatte (18) als Boden des Raumes (14) mit mehreren durchgehenden Löchern (32), deren Ränder mit entsprechenden Zähnen versehen sind, die in den Raum (14) ragen. Diese Basis (10) ist mit mehreren Verstärkungsrippen (70, 71) versehen,
- einem Gewindestab (20), der von der Platte nach oben geht und für den Reibevorgang (18) im Raum (14) dient, und
- einer Druckplatte (22) mit einem mittleren Gewindeloch (24), die mit dem Gewindestab (20) mit einem geeigneten Außendurchmesser verbunden ist, um die Innenwand des Elements (12) in Form einer umgekippten Tasse so zu verbinden, dass die Drehbewegung des Elements (12) in Form einer umgekippten Tasse gegenüber der Basis (10) die Verlagerung der Druckplatte (22) längs dem Stab (20) bewirkt und damit das Andrücken des Lebensmittelproduktes gegen die Platte (18) für Zerkleinerung desselben und seiner Verteilung im Behälterraum (14),
**gekennzeichnet durch** die Tatsache, dass die besagten Verstärkungsrippen (70, 71) aus primären Verstärkungsrippen (70) bestehen, mit einem Querschnitt, der progressiv vom Rande bis zur Mitte der besagten Basis (10) zunimmt, und aus sekundären Verstärkungsrippen (71) mit gleichbleibendem Querschnitt an den Rändern und verkleinertem Querschnitt gegen die Mitte der besagten Basis (10).

2. Behälter/Reibe (1), gemäß Patentanspruch 1, **gekennzeichnet durch** die Tatsache, dass die besagten Verstärkungsrippen (70, 71) so auf der besagten Basis (10) angeordnet sind, dass sie außerhalb der besagten Behälter/Reibe (1) liegen, d.h. seitlich der Basis (10), und damit nicht mit dem zu reibenden Lebensmittel in Berührung.

3. Behälter/Reibe (1), gemäß Patentanspruch 1, **gekennzeichnet durch** die Tatsache, dass die besagten Verstärkungsrippen (70, 71) aus sekundären Verstärkungsrippen (71) bestehen und ein Kreuz bilden, dessen Mittelpunkt auf dem Berührungspunkt zwischen der besagten Basis (10) und dem Gewindestab (20) liegt.

4. Behälter/Reibe (1), gemäß Patentanspruch 1, **gekennzeichnet durch** die Tatsache, dass die besagten Verstärkungsrippen (70, 71) aus vier primären Verstärkungsrippen (70) bestehen und ein Kreuz bilden, dessen Mittelpunkt auf dem Berührungspunkt zwischen der besagten Basis (10) und dem Gewindestab (20) liegt.

5. Behälter/Reibe (1), gemäß Patentanspruch 1, **gekennzeichnet durch** die Tatsache, dass die besagten Verstärkungsrippen (70, 71) aus vier primären Verstärkungsrippen (70) und zwei sekundären Verstärkungsrippen (71) bestehen, und alle ein Kreuz bilden, dessen Mittelpunkt auf dem Berührungspunkt zwischen der besagten Basis (10) und dem Gewindestab (20) liegt, wobei die besagten sekundären Verstärkungsrippen (71) im gleichen Abstand in dem Raum der beiden primären Verstärkungsrippenpaare (70) oder parallel zu den besagten primären Verstärkungsrippen (70) angeordnet sind.

6. Behälter/Reibe (1), gemäß Patentanspruch 1, **gekennzeichnet durch** die Tatsache, dass mehrere Ansätzen (72) im Verbindungspunkt zwischen der besagten Basis (10) und dem besagten Gewindestab (20) im Inneren des besagten Behälters/Reibe (1) vorhanden sind.

7. Behälter/Reibe (1), gemäß Patentanspruch 6, **gekennzeichnet durch** die Tatsache, dass die besagten Ansätze (72) vier Stück sind, auf der besagten Basis (10) aufliegen und symmetrisch um den besagten Gewindestab (20) angeordnet sind.

8. Behälter/Reibe (1), gemäß Patentanspruch 1, **gekennzeichnet durch** die Tatsache, dass mehrere Stützmittel (90) vorhanden sind, um den Stab (20) auf der den besagten Verstärkungsrippen (70, 71) gegenüberliegenden Seite zu verstärken.

9. Behälter/Reibe (1), gemäß Patentanspruch 8, **gekennzeichnet durch** die Tatsache, dass die besagten Stützmittel (90) sechs Stück sind und außen sternförmig von dem besagten Stab (20) ausgehen.

10. Behälter/Reibe (1), gemäß Patentanspruch 8 oder 9, **gekennzeichnet durch** die Tatsache, dass die besagten Stützmittel (90) aus einem zusätzlichen Teil bestehen, das zwischen Behälter (1) und Stab (20) vorgesehen ist.

11. Behälter/Reibe (1), gemäß Patentanspruch 8 oder 9, **gekennzeichnet durch** die Tatsache, dass die besagten Stützmittel (90) ein einziges Teil mit dem Behälter (1) bilden.

## Revendications

1. Râpe et conteneur (1) renforcés pour produits alimentaires friables notamment le fromage dur, comprenant :
- une base (10) sur laquelle un élément (12) en forme de godet renversé est monté de manière pivotante afin de former une chambre (14) contenant le produit alimentaire ; cette base (10) est composée d'une plaque à râper (18) qui constitue le fond de la chambre (14) et qui possède plusieurs trous passants (32) dont les bords sont dotés de dents qui sortent dans la chambre (14) ; par ailleurs, cette base (10) est pourvue de plusieurs nervures de renfort (70, 71) ;
- une tige filetée (20) s'étend vers le haut à partir de la plaque à râper (18) à l'intérieur de la chambre (14) et
- une plaque de pression (22) dotée d'un trou fileté central (24) où pénètre la tige filetée (20) ; la mesure du périmètre externe de la plaque permet d'enclencher la paroi interne de l'élément (12) en forme de godet renversé de sorte que la rotation de cet élément (12) par rapport à la base (10) entraîne la translation de la plaque de pression (22) le long de la tige (20) et, par conséquent, la compression du produit alimentaire contre la plaque (18) afin que ce dernier soit râpé et distribué dans la chambre de contenance (14),
râpe et conteneur dont les nervures de renfort (70, 71) sont composées de premières nervures de renfort (70) dotées d'une section transversale progressivement croissante à partir de l'extrémité vers le centre de la base (10) et de secondes nervures de renfort (71) dotées d'une section transversale uniforme vers les extrémités et d'une section transversale réduite vers le centre de la base (10).

2. Râpe et conteneur (1), selon la revendication 1, dont les nervures de renfort (70, 71) se trouvent dans la base (10) à l'extérieur de la râpe-conteneur (1), à savoir du côté de la base (10) et non pas au contact du produit alimentaire à râper.

3. Râpe et conteneur (1), selon la revendication 1, dont les nervures de renfort (70, 71) sont composées de deux secondes nervures de renfort (71) positionnées de manière à former une croix dont le centre est constitué par le point de contact entre la base (10) et la tige filetée (20).

4. Râpe et conteneur (1), selon la revendication 1, dont les nervures de renfort (70, 71) sont composées de quatre premières nervures de renfort (70) positionnées de manière à former une croix dont le centre est constitué par le point de contact entre la base (10) et la tige filetée (20).

5. Râpe et conteneur (1), selon la revendication 1, dont les nervures de renfort (70, 71) sont composées de quatre premières nervures de renfort (70) et deux secondes nervures de renfort (71), toutes positionnées de manière à former une croix dont le centre est constitué par le point de contact entre la base (10) et la tige filetée (20) ; ces deux secondes nervures de renfort (71) sont équidistantes dans l'espace formé par les deux couples de premières nervures de renfort (70) et elles sont parallèles par rapport aux premières nervures de renfort (70).

6. Râpe et conteneur (1), selon la revendication 1, dotés de plusieurs épaulements (72) situés au niveau du raccord entre la base (10) et la tige filetée (20) à l'intérieur de la râpe-conteneur (1).

7. Râpe et conteneur (1), selon la revendication 6, **caractérisés par** des épaulements (72), au nombre de quatre, reposant sur la base (10) et placés de manière symétrique autour de la tige filetée (20).

8. Râpe et conteneur (1), selon la revendication 1, dotés de plusieurs moyens de support (90) servant à renforcer la tige (20) à l'extrémité opposée par rapport aux nervures (70, 71).

9. Râpe et conteneur (1), selon la revendication 8, **caractérisés par** des moyens de support (90), au nombre de six, rayonnant en étoile à l'extérieur à partir de la tige (20).

10. Râpe et conteneur (1), selon la revendication 8 ou 9, **caractérisés par** des moyens de support (90) dotés d'une pièce additionnelle interposée entre le conteneur (1) et la tige (20).

11. Râpe et conteneur (1), selon la revendication 8 ou 9, **caractérisés par** des moyens de support (90) formant une seule pièce avec le conteneur (1).
